# EUROPEAN PATENT SPECIFICATION

(11) **EP 0 958 253 B1**
(45) Date of publication and mention of the grant of the patent: **05.12.2001**
(21) Application number: 97939257.8
(22) Date of filing: 01.09.1997
(51) Int. Cl.: C02F 11/12, F26B 3/20

(54) **METHOD AND APPARATUS FOR THE CONTINUOUS DEHYDRATION OF SLUDGE**
METHODE UND VORRICHTUNG ZUR KONTINUIERLICHEN SCHLAMMENTWASSERUNG
PROCEDE ET DISPOSITIF POUR DESHYDRATER DES BOUES EN CONTINU

(30) Priority: 03.09.1996 NL 1003950
(43) Date of publication of application: 24.11.1999
(73) Proprietor: DHV Milieu en Infrastructuur B.V., 3818 EX Amersfoort (NL); TECHNISCHE UNIVERSITEIT DELFT, 2628 RX Delft (NL)
(72) Inventor: VAN POPPEL, Eduardus, Julius, Maria, NL-5056 AC Berkel Enschot (NL); REM, Peter Carlo, NL-2288 AB Rijswijk (NL)
(74) Representative: Kupecz, Arpad
(86) International application number: NL9700500
(87) International publication number: WO9809920

(56) References cited:
- WO-A-96/06805
- FR-A- 634 981
- GB-A- 423 934
- GB-A- 1 163 180
- US-A- 3 859 734
- US-A- 3 898 745

## Description

The present invention relates to a method of the continuous dehydration of sludge wherein, prior to dehydration, water is mechanically removed from the sludge and the thus obtained sludge of cutting consistency is mixed with heated spheres, as well as an apparatus for carrying out such a method.

Before discussing the prior art it is observed that the processing of sludge is one of the major problems of the immediate future. The reason is, that it is difficult to remove water from sludge (mechanically). Sludge consists of (very) small particles varying from roughly 1 to 50 µm in size. When water is removed, these small particles are the cause of a clay-like structure with many pores. The water in said pores is difficult to remove by means of mechanical treatment (for instance by pressing). The content of organic matter also considerably influences the water removal properties. The source of the sludge determines its composition and consequently also its water removal properties. For instance, one may discriminate between sludge coming from the processing of polluted soil, the processing of construction and demolition rubble, (sewage) water purification installations, channel beds or industrial waste-water treatment installations.

Formerly, various kinds of sludge were used as agricultural fertilizers. Due to stricter environmental legislation and the manure surplus, this practice has virtually fallen into complete disuse. Nowadays the ensuing sludge streams are dumped or, if the sludge is heavily polluted, incinerated. At the moment the usual costs for dumping amount to Dfl. 80.- to 120.- per tonne and incineration costs are about Dfl. 500.- per tonne. To keep the costs for the sludge disposal within limits, extensive water removal is advisable. Sludge from construction and demolition waste contains little organic matter and it is generally easy to remove water mechanically to an approximate dry matter content of 65%. The sludge from soil decontaminators generally contains more organic matter, up to approx. 20%, and mechanical water removal is possible up to a dry matter content of 40-50%. The sludge from the purification of waste water sometimes contains more than 50% organic matter so that mechanical water removal results at best in an approximate dry matter content of 20%.

Thus, for a considerabl part, the processing costs for sludge are determined by the water content. A lower moisture content is practically only possible by evaporating water. However, evaporating water requires much energy, 2260 kJ per kg water. By way of comparison, this is equivalent to the amount of energy required to raise the temperature of 10 kg water by 53°C.

In the majority of dehydration installations large quantities of hot air are used to withdraw water from the material. The costs for dehydrating sludge amount to approx. Dfl. 200.- per tonne. In a number of cases the sludge does not need to be dumped subsequent to dehydration because the dehydrated sludge can be used for other purposes.

The method and apparatus described in the preamble are known from WO-A 91/19145.

The known method is carried out at atmospheric pressure. In order to obtain a large heat transferring surface, metal spheres are added to the sludge. Prior to the addition of the spheres to the sludge, they are heated to approx. 150°C by means of hot gas. Because the dehydration process takes place in a revolving drum with a screw conveyor, mixing of the spheres with the sludge is assured, with good heat transfer. Finally the spheres are separated from the sludge. According to this known method the apparatus is able to process a sludge stream of 5.2 tonnes per hour having a dry matter content of 15%, yielding 95% dry matter in four minutes. An important disadvantage of the known method is the large amount of hot air/ gas required, which obviously means considerable energy consumption.

U.S-A-3 859 734 discloses a method and apparatus for drying wet material, such as blood-plasma, digested sludge, forage, fish, cereals, etc., however the material is fed batchwise, together with a large number of heated water-filled balls.

The object of the invention is to provide a method and an apparatus wherein the above-mentioned disadvantage of unnecessary loss of energy is effectively removed.

To this end the invention provides a method of continuous dehydration of sludge wherein, prior to dehydration, water is mechanically removed from the sludge and the thus obtained sludge of cutting consistency is mixed with heated spheres, characterized in that dehydration is carried out at reduced pressure, wherein the sludge from which water has been mechanically removed is intimately mixed with the heated spheres which during the dehydration process give off their heat to the sludge, the dehydrated sludge and the cooled spheres are then separated from each other, the dehydrated sludge is removed, while the cooled spheres are reheated, partly by condensation of water evaporating from the sludge, and subsequently added to fresh sludge that is to be dehydrated.

The addition of spheres is necessary to improve the heat capacity of the mixture because the heat capacity of the sludge alone does not suffice.

According to the present method it is possible to process 0.5 to 10 tonnes of sludge stream per hour, depending on the size of the dehydration installation. The energy input is roughly 10-25% of the required evaporation heat.

The method according to the invention is commercially very advantageous because the estimated price for dehydrating sludge may be less than Dfl. 50.- per tonne (price level 1996).

According to the present method, water is mechanically removed from the sludge prior to dehydration with the aid of, for instance, a straining belt until said sludge is of cutting consistency. Due to the frictional resistance it is not possible to pump such material without a large pressure vessel.

It should be noted that the spheres are heated by means of water vapour. The water vapour develops during the hot spheres' contact with the wet sludge. The spheres have three objectives:
a) to raise the heat capacity of the sludge mixture;
b) to improve the transport of the sludge;
c) to improve the transport and the recovery of heat;

Advantageously the spheres are heated by means of steam to 125-150°C. Water vapour from the sludge recondenses on the spheres, giving off its heat to, and thereby heating said spheres.

This causes the formation of a water layer on the spheres which preferably is removed prior to their being added to the fresh sludge. The water layer thus formed has a thickness of approx. 40 *µ*m. It has been shown that removal of the water layer increases the capacity of the dehydration installation.

This water removal process may, for instance, be effectuated by feeding the spheres through two conveyor belts made of a spongy material. This removes the water layer from the spheres.

Preferably the spheres are made of steel but they may also be made from another material such as a suitable ceramic material.

The diameter of the spheres is usually 8-16 mm. In addition to the heating function, the spheres also have a mixing effect on the sludge.

Characteristically, the pressure in the conveyor is at the start approx. 2 bars and at the finish approx. 0.05 bar.

The mass ratio sludge/spheres is usually 1:10 to 1:30 and preferably 1:25.

According to the present invention the sludge remains in the dehydrator for approx. 1-5 minutes.

Finally, the invention relates to an apparatus for carrying out the method according to the present invention.

To this end the apparatus according to a preferred embodiment of the invention is characterized in that the apparatus is provided with a first tube with a screw conveyor and a shaft for intimately mixing and transporting sludge and heated spheres, and a second tube with screw conveyor with shaft for the transport of spheres to be heated, which tubes are interconnected by means of at least one pipe, separation device for the separation of the spheres from the dehydrated sludge, sludge outlet, sludge inlet, water removal belt for the spheres, discharge for the spheres and water and inlet for the spheres to the first tube.

Notably, the first tube is provided with a vacuum pump and the second with a heat supply pipe.

According to another embodiment the apparatus according to the invention is characterized in that the apparatus is provided with a drum for mixing sludge which has undergone mechanical water removal with hot spheres, a first turret and a counter-revolving second turret, discharge location for the heated spheres, drum for the separation of the sludge and the spheres and outlet for the dehydrated sludge.

The apparatus and the method are further elucidated with reference to the accompanying figures.

Figure 1 shows the preferred embodiment according to the invention, wherein the apparatus is a screw type apparatus.

Figure 1a is a top view of the screw type apparatus and Figure 1b is a side view.

Figure 2 shows a different embodiment of the invention, based on the turret principle.

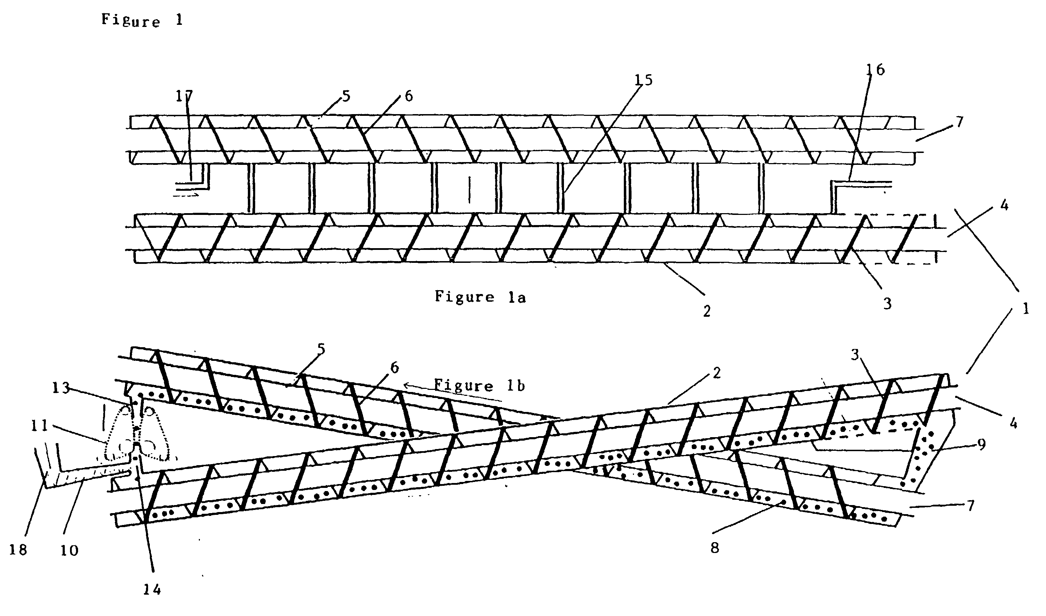

The preferred apparatus (1) in Figure 1 is provided with a first tube (2), encompassing a screw conveyor (3) with shaft (4). In this tube the sludge, which has previously undergone mechanical water removal, is intimately mixed with the heated spheres, and the thus obtained mixture is transported to the separating apparatus (9), in which separation of the meanwhile cooled spheres from the dehydrated sludge takes place. The apparatus is further provided with a second tube (5), encompassing a screw conveyor (6) with shaft (7), and in which transport of the spheres (8), cooled in the first tube, takes place.

The tubes (2) and (5), usually manufactured from steel, are interconnected by at least one pipe (15). The tube (2) is provided with a sludge outlet (12) for the discharge of dehydrated sludge. Further, the apparatus according to Figure 1 is provided with sludge inlet (10) as well as the water removal belt (11) for the spheres (8). The tube (5) is further provided with outlet (13) for the spheres, while in tube (2) an inlet (14) to the first tube (2) is provided for the spheres. Usually the first tube (2) is provided with a vacuum pump (16) for reducing the pressure in the tube system.

Further, the second tube (5) may be provided with a heat supply pipe (17) for the supply of extra heat to the spheres. In general the spheres are made from steel but, for instance, ceramic spheres may also successfully be used.

The apparatus may be provided with an extruder (18) in which the sludge from which water has to be removed may be pre-heated by means of steam or another heat source. The extruder compresses the sludge into thin strands prior to being transported into the tube (2). In addition, the extruder advantageously decreases air included in the sludge.

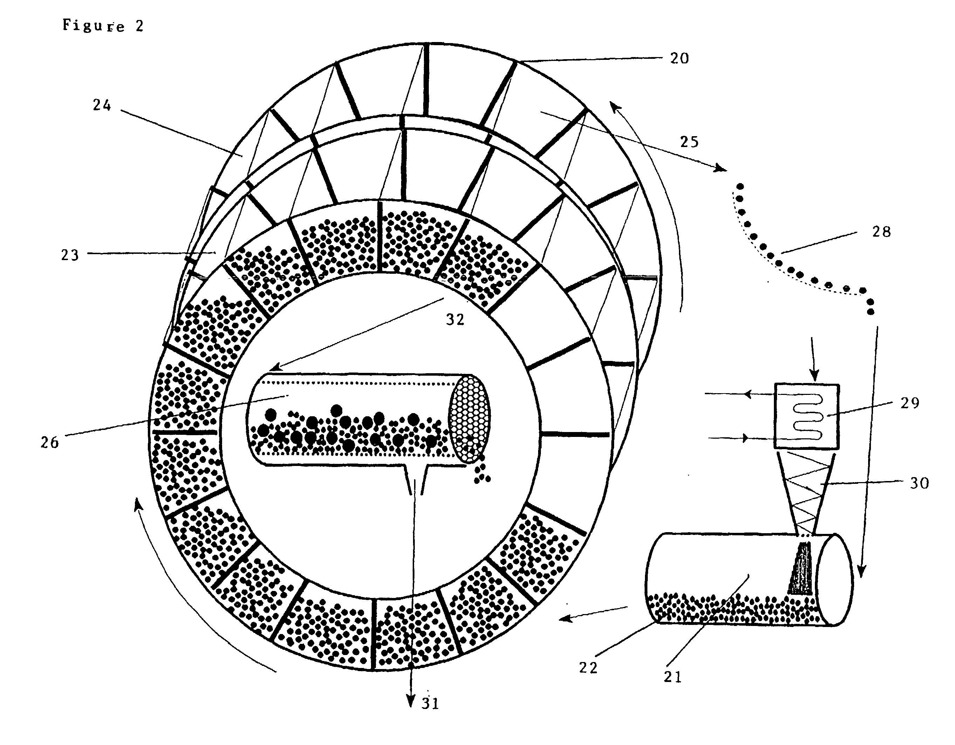

Another favourable embodiment of the invention is shown in Figure 2, which embodiment is based on the so-called turret principle.

In Figure 2 the apparatus (20) is provided with a drum (21) for mixing sludge, which has undergone mechanical water removal, with hot spheres (22). The drum (21) is provided with heating unit (29) for heating the sludge, for instance with steam, and an extruder (30) compressing the sludge into thin layers. The apparatus is further provided with a first turret (23) and a second turret (24) with compartment (32), which turrets counter-revolve in relation to each other, a compartment of the first turret always being in communication with a compartment of the second turret containing the heated spheres. Further, the second turret (24) is provided with a discharge (25) for the discharge of heated spheres. From compartment (32) of the first turret the mixture of spheres and dehydrated sludge can be discharged under the influence of gravitational force. In the drum (26) dehydrated sludge and spheres are separated, subsequently the desludged spheres are conveyed into a compartment of the second turret. Drum (26) is provided with an outlet (31) for the discharge of dehydrated sludge. In the second turret (24) the cooled spheres are reheated by absorbing condensation energy. Subsequent to heating, the adhering water is removed from the spheres in a straining belt (28).

The invention will be further elucidated with reference to the included examples.

### Examples 1, 2, 3

Prior to conveying sludge from soil decontaminators into a continuous dehydration apparatus of the turret kind in accordance with the invention as shown in Figure 1, water was removed from said sludge with the aid of a straining belt press to obtain a dry matter content of DS₁. The sludge was preheated to a temperature (T₁) after which hot spheres (temperature T₂, 9 mm diameter) were added to the sludge and thoroughly mixed in the first tube of the apparatus according to Figure 1. After mixing, the temperature was T₃. The ratio spheres/sludge (mass ratio) was 25:1. The pressure was gradually reduced in 10 steps to 45 millibars. This pressure reduction resulted in a gradual evaporation of water lowering the temperature to T₄. The water vapour formed during steps 1 to 9 is led separately to tube 5 of the apparatus according to Figure 1, containing relatively cold spheres. Due to the condensation of the water vapour the spheres (temperature 30°C) are heated in nine steps (to T₅). By means of a vacuum pump the water vapour from step 10 was removed via a condenser. At the conclusion the dry matter content was DS₂. The sludge remained in the apparatus according to the invention for approximately only 5 minutes.

The results from three experiments, which experiment was conducted with two batches of sludge, are as follows.

| Dry matter content (DS) | | | | Temperature | | | | |
|---|---|---|---|---|---|---|---|---|
| Exp. | Sludge | DS₁ | DS₂ | T₁ | T₂ | T₃ | T₄ | T₅ |
| 1 | 1 | 48% | 80% | 50°C | 115°C | 101°C | 29°C | 84°C |
| 2 | 2 | 52% | 93% | 50°C | 120°C | 106°C | 30°C | 98°C |
| 3 | 2 | 52% | 90% | 30°C | 120°C | 102°C | 30°C | 95°C |

The Table shows that after treatment of the sludge according to the invention, the solid content of the dehydrated sludge was 80, 93 and 90% by weight respectively.

To bring the spheres to the desired temperature (from T₅ to T₂) an energy input (Q₁) is required. This energy input is calculated per kilogram removed water. Heating the sludge also requires energy (Q₂). The total energy input is the sum of these two.

| Exp. | Q₁ | Q₂ | Total |
|---|---|---|---|
| 1 | 850 kJ/kg water | 195 kJ/kg water | 1045 kJ/kg water |
| 2 | 640 kJ/kg water | 177 kJ/kg water | 817 kJ/kg water |
| 3 | 770 kJ/kg water | 62 kJ/kg water | 832 kJ/kg water |

It will be clear that the present invention is not limited to the above-mentioned embodiments.

## Claims

1. A method of the continuous dehydration of sludge wherein, prior to dehydration, water is mechanically removed from the sludge and the thus obtained sludge of cutting consistently is mixed with heated spheres, **characterized in that** dehydration is carried out at reduced pressure, wherein the sludge from which water has been mechanically removed is intimately mixed with the heated spheres which during the dehydration process give off their heat to the sludge, the dehydrated sludge and the cooled spheres are then separated from each other, the dehydrated sludge is removed, while the cooled spheres are reheated by means of water vapour formed in the dehydration step and subsequently added to fresh sludge that is to be dehydrated.

2. A method according to claim 1, **characterized in that** the spheres are heated by means of steam to 125-150°C.

3. A method according to claim 1 or 2, **characterized in that** the spheres are heated by means of condensing water vapour from the dehydration process.

4. A method according to claims 1 - 3, **characterized in that** the water layer, which the spheres acquire during contact with the water vapour, is removed prior to mixing said spheres with the sludge to be dehydrated.

5. A method according to claim 4, **characterized in that** said water layer is removed from the spheres by feeding the spheres through two conveyor belts made of a spongy material.

6. A method according to claims 1 - 5, **characterized in that** the spheres are made from steel.

7. A method according to claim 6, **characterized in that** the diameter of the spheres is 8-16 mm.

8. A method according to claims 1 - 7, **characterized in that** the pressure in the system is at the start about 2 bars and at the finish about 0.05 bar.

9. A method according to claims 1 - 8, **characterized in that** the mass ratio sludge/spheres is 1:10 to 1:30.

10. A method according to claim 9, **characterized in that** the mass ratio sludge/spheres is about 1:25.

11. A method according to claims 1 - 10, **characterized in that** the dehydration process takes 1-5 minutes.

12. An apparatus for carrying out the method in accordance with the invention according to claims 1-11, **characterized in that** the apparatus (1) is provided with first tube (2) with a screw conveyor (3) and a shaft (4) for intimately mixing and transporting sludge and heated spheres, and a second tube (5) with screw conveyor (6) with shaft (7) for the transport of spheres (8) to be heated, which tubes are interconnected by means of at least one pipe (15), separation device (9) for the separation of the spheres from the dehydrated sludge, sludge outlet (12), sludge inlet (10), water removal belt (11) for the spheres (8), discharge (13) for the spheres and inlet (14) for the spheres to the first tube (2).

13. An apparatus according to claim 12, **characterized in that** the first tube (2) is provided with a vacuum pump (16).

14. An apparatus according to claim 12 and 13, **characterized in that** the second tube (5) is provided with heat supply pipe (17).

15. An apparatus for carrying out the method according to claims 1-11, **characterized in that** the apparatus (20) is provided with a drum (21) for mixing sludge which has undergone mechanical water removal with hot spheres (22), a first turret (23) and a counter-revolving second turret (24) with compartments (32), discharge location (25) for the heated spheres, drum (26) for the separation of the dehydrated sludge and the spheres and outlet (31) for the dehydrated sludge.

## Patentansprüche

1. Verfahren des kontinuierlichen Entwässerns von Schlamm, bei welchem vor einem Entwässern das Wasser vom Schlamm mechanisch abgetrennt wird, und der auf diese Weise erhaltene schneidfeste Schlamm mit erhitzten Kugeln vermischt wird,
**dadurch gekennzeichnet,**
**dass** das Entwässern bei verringertem Druck durchgeführt wird, wobei der Schlamm, vom welchem Wasser mechanisch abgetrennt wurde, mit den erhitzten Kugeln gründlich vermischt wird, welche während des Entwässerungsvorgangs ihre Wärme an den Schlamm abgeben, dass der entwässerte Schlamm und die abgekühlten Kugeln danach voneinander getrennt werden, dass der entwässerte Schlamm beseitigt wird, während die abgekühlten Kugeln mittels beim Verfahrensschritt des Entwässerns gebildeten Wasserdampf wiedererhitzt werden und anschließend frischem Schlamm, welcher zu entwässern ist, zugesetzt werden.

2. Verfahren nach Anspruch 1,
**dadurch gekennzeichnet,**
**dass** die Kugeln mittels Dampf auf 125 - 150 °C erhitzt werden.

3. Verfahren nach Anspruch 1 oder 2,
**dadurch gekennzeichnet,**
**dass** die Kugeln mittels Kondenswasserdampf von dem Entwässerungsvorgang erhitzt werden.

4. Verfahren nach den Ansprüchen 1 - 3,
**dadurch gekennzeichnet,**
**dass** die Wasserschicht, welche die Kugeln beim Inkontaktkommen mit dem Wasserdampf annehmen, entfernt wird, bevor die Kugeln mit dem zu entwässernden Schlamm vermischt werden.

5. Verfahren nach Anspruch 4,
**dadurch gekennzeichnet,**
**dass** die Wasserschicht von den Kugeln entfernt wird, indem die Kugeln durch zwei aus einem schwammigen Material gefertigten Förderbändern zugeführt werden.

6. Verfahren nach den Ansprüchen 1 - 5,
**dadurch gekennzeichnet,**
**dass** die Kugeln aus Stahl gefertigt werden.

7. Verfahren nach Anspruch 6,
**dadurch gekennzeichnet,**
**dass** der Durchmesser der Kugeln 8 - 16 mm beträgt.

8. Verfahren nach den Ansprüchen 1 - 7,
**dadurch gekennzeichnet,**
**dass** der Druck im System am Anfang etwa 2 Bar und am Ende etwa 0,05 Bar beträgt.

9. Verfahren nach den Ansprüchen 1 - 8,
**dadurch gekennzeichnet,**
**dass** das Schlamm/Kugeln-Masseverhältnis bei 1:10 bis 1:30 liegt.

10. Verfahren nach Anspruch 9,
**dadurch gekennzeichnet,**
**dass** das Schlamm/Kugeln-Masseverhältnis bei etwa 1:25 liegt.

11. Verfahren nach Anspruch 1 - 10,
**dadurch gekennzeichnet,**
**dass** der Entwässerungsvorgang 1-5 Minuten dauert.

12. Vorrichtung zur Durchführung des erfindungsgemäßen Verfahrens nach den Ansprüchen 1 - 11,
**dadurch gekennzeichnet,**
**dass** die Vorrichtung (1) versehen ist mit einer ersten Röhre (2) mit einem Schneckenförderer (3) und einer Welle (4) zum gründlichen Mischen und Transportieren des Schlamms und der erhitzten Kugeln, und einer zweiten Röhre (5) mit einem Schneckenförderer (6) mit einer Welle (7) für den Transport der zu erhitzenden Kugeln (8), welche Röhren miteinander verbunden sind mittels zumindest einer Rohrleitung (15), einer Trennvorrichtung (9) zum Trennen der Kugeln von dem entwässerten Schlamm, einem Schlammauslaß (12), einem Schlammeinlaß (10), einem Wasserentziehungsband (11) für die Kugeln (8), einem Auslauf (13) für die Kugeln und einem Zulauf (14) für die Kugeln zu der ersten Röhre (2).

13. Vorrichtung nach Anspruch 12,
**dadurch gekennzeichnet,**
**dass** die erste Röhre (2) mit einer Vakuumpumpe (16) versehen ist.

14. Vorrichtung nach Anspruch 12 und 13,
**dadurch gekennzeichnet,**
**dass** die zweite Röhre (5) mit einer Wärmezufuhrleitung (17) versehen ist.

15. Vorrichtung zur Durchführung des Verfahrens nach den Ansprüchen 1 - 11,
**dadurch gekennzeichnet,**
**dass** die Vorrichtung (20) versehen ist mit einer Trommel (21) zum Mischen des Schlamms, welcher einem mechanischen Abtrennen von Wasser mit heißen Kugeln (22) unterzogen wurde, einem ersten Revolver (23) und einem gegenläufigen zweiten Revolver (24) mit Fächern (32), einer Entladestelle (25) für die erhitzten Kugeln, einer Trommel (26) für die Trennung des entwässerten Schlamms und der Kugeln, und einem Auslaß (31) für den entwässerten Schlamm.

## Revendications

1. Procédé pour la déshydratation continue d'une boue, dans lequel, avant déshydratation, l'eau est éliminée mécaniquement de la boue et la boue de coupe ainsi obtenue, est mélangée uniformément à des sphères chauffées, **caractérisé en ce que** la déshydratation est effectuée sous pression réduite, la boue de laquelle l'eau a été éliminée mécaniquement étant mélangée intimement aux sphères chauffées qui, au cours du procédé de déshydratation, transmettent leur chaleur à la boue, la boue déshydratée étant ensuite séparée des sphères refroidies, la boue déshydratée étant évacuée, tandis que les sphères refroidies sont chauffées à nouveau au moyen de vapeur d'eau formée dans l'étape de déshydratation et sont ensuite ajoutées à une nouvelle boue qui doit être déshydratée.

2. Procédé suivant la revendication 1, **caractérisé en ce que** les sphères sont chauffées au moyen de vapeur d'eau à une température comprise dans l'intervalle de 125 à 150°C.

3. Procédé suivant la revendication 1 ou 2, **caractérisé en ce que** les sphères sont chauffées au moyen de vapeur d'eau de condensation provenant du procédé de déshydratation.

4. Procédé suivant les revendications 1 à 3, **caractérisé en ce que** la couche d'eau, que les sphères acquièrent au cours du contact avec la vapeur d'eau, est éliminée avant le mélange desdites sphères à la boue à déshydrater.

5. Procédé suivant la revendication 4, **caractérisé en ce que** ladite couche d'eau est éliminée des sphères en passant les sphères à travers deux bandes de transport constituées d'une matière spongieuse.

6. Procédé suivant les revendications 1 à 5, **caractérisé en ce que** les sphères sont constituées d'acier.

7. Procédé suivant la revendication 6, **caractérisé en ce que** le diamètre des sphères est compris dans l'intervalle de 8 à 16 mm.

8. Procédé suivant les revendications 1 à 7, **caractérisé en ce que** la pression dans le système est, au début, d'environ 2 bars et, à la fin, d'environ 0,05 bar.

9. Procédé suivant les revendications 1 à 8, **caractérisé en ce que** le rapport en masse boue/sphères est compris dans l'intervalle de 1:10 à 1:30.

10. Procédé suivant la revendication 9, **caractérisé en ce que** le rapport en masse boue/sphères est égal à environ 1:25.

11. Procédé suivant les revendications 1 à 10, **caractérisé en ce que** l'opération de déshydratation est mise en oeuvre pendant un temps de 1 à 5 minutes.

12. Appareil pour la mise en oeuvre du procédé conforme à la présente invention suivant les revendications 1 à 11, **caractérisé en ce que** l'appareil (1) est muni d'un premier tube (2) avec un transporteur à vis (3) et un arbre (4) pour mélanger intimement et transporter la boue et les sphères chauffées, et d'un second tube (5) avec un transporteur à vis (6) et un arbre (7) pour le transport des sphères (8) à chauffer, tubes qui sont interconnectés au moyen d'au moins un conduit (15), d'un dispositif de séparation (9) pour séparer les sphères de la boue déshydratée, d'un orifice de sortie de boue (12), d'un orifice d'admission de boue (10), d'une courroie d'élimination d'eau (11) pour les sphères (8), d'un orifice de décharge (13) pour les sphères et d'un orifice d'admission (14) pour les sphères dans le premier tube (2).

13. Appareil suivant la revendication 12, **caractérisé en ce que** le premier tube (2) est muni d'une pompe à vide (16).

14. Appareil suivant les revendications 12 et 13, **caractérisé en ce que** le second tube (15) est muni d'un conduit d'apport de chaleur (17).

15. Appareil pour la mise en oeuvre du procédé suivant les revendications 1 à 11, **caractérisé en ce que** l'appareil (20) est muni d'un tambour (21) pour mélanger la boue qui a subi une élimination mécanique de l'eau aux sphères chaudes (22), d'une première tourelle (23) et d'une seconde tourelle contrarotative (24) avec des compartiments (32), d'un emplacement de décharge (25) des sphères chauffées, d'un tambour (26) pour la séparation de la boue déshydratée des sphères et d'un orifice de sortie (31) pour la boue déshydratée.
